(19) Europäisches Patentamt

European Patent Office

Office européen des brevets

(11) **EP 4 530 890 A1**

(12) **EUROPEAN PATENT APPLICATION**

(43) Date of publication:
**02.04.2025 Bulletin 2025/14**

(21) Application number: **23200374.9**

(22) Date of filing: **28.09.2023**

(51) International Patent Classification (IPC):
**G06F 18/21** (2023.01)   **G06F 18/25** (2023.01)
**G06N 3/091** (2023.01)   **G06V 10/778** (2022.01)
**G06V 10/80** (2022.01)

(52) Cooperative Patent Classification (CPC):
**G06F 18/217; G06F 18/2185; G06F 18/25;
G06N 3/091; G06V 10/778; G06V 10/80;
G06V 10/811;** G06V 10/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Robert Bosch GmbH**
  **70442 Stuttgart (DE)**

• **CARIAD SE**
  **38440 Wolfsburg (DE)**

(72) Inventors:
• **Beluch, William Harris**
  **70197 Stuttgart (DE)**
• **Patel, Kanil**
  **13189 Berlin (DE)**

(74) Representative: **Bösherz Goebel Patentanwälte**
  **Rheinberger Weg 6**
  **40670 Meerbusch (DE)**

(54) **METHOD AND DEVICE FOR ACTIVE LEARNING FROM MULTIMODAL INPUT**

(57)     Device and computer-implemented method for active learning from multimodal input, wherein the method comprises providing (502) the input and learning (504) a model depending on the input, wherein the input comprises input of different modes, and wherein learning (504) the model comprises determining (504-1) an input of a mode from the input of different modes depending on an acquisition function that comprises a measure for a cost for labelling the input of the mode, labelling (504-2) the input of the mode with a label, and learning (504-3) the model depending on the label. Technical system comprising the device.

**EP 4 530 890 A1**

**Description**

Background

The invention relates to a device and a method for active learning from multimodal input.

Active learning approaches assume a fixed budget in terms of number of images acquired, and simulate this by learning in iterations and adding a certain number of the acquired images during each iteration. The images that are added are selected based on some criteria.

Disclosure of the invention

The method and device for active learning from input according to the independent claims uses an acquisition function for selecting, from the input, the input to be labelled. Multimodal input in this context refers to sensor data of different modes, e.g., digital image, LiDAR image, radar image, ultrasound image, infrared image, sound, to the multimodal sensor data. In a sensor data fusion setup, the acquisition function leverages the modes from the multimodal input and their associated costs to minimize a total cost spent and to maximize network performance. As different tasks from different modes can be complementary in the fusion setup, it may not be required to label the input of all modes of the multimodal input, and in fact it may be undesirable considering different annotation costs.

The method for active learning from multimodal input comprises providing the input and learning a model depending on the input, wherein the input comprises input of different modes, and wherein learning the model comprises determining an input of a mode from the input of different modes depending on an acquisition function that comprises a measure for a cost for labelling the input of the mode, labelling the input of the mode with a label, and learning the model depending on the label.

The acquisition function may comprise a measure of an uncertainty of the model with respect to the input of the mode.

The method may comprise active learning the model for different tasks, wherein the acquisition function comprises a measure for a synergy of learning the different tasks with the input of the mode.

The method may comprise determining inputs of different modes from the input of different modes depending on the acquisition function.

Providing the input may comprise providing the input to comprise an input of the mode digital image, LiDAR image, radar image, ultrasound image, infrared image, or acoustic signal.

Providing the input may comprise capturing the input with sensors, in particular a digital image sensor, a LiDAR image sensor, a radar image sensor, an ultrasound image sensor, an infrared image sensor, or an acoustic signal sensor.

The method may comprise learning the model to map the input with the model to an output, and actuating a technical system depending on the output.

The device for active learning from multimodal input, characterized in that the device comprises at least one processor and at least one memory that is configured to store instructions that when executed by the at least one processor cause the device to execute the method according to one of the claims 1 to 6, wherein the processor is configured to execute the instructions.

The device may comprise sensors or an interface for sensors for capturing the input.

The device may comprise an actuator or an interface for an actuator for actuating a technical system.

A technical system that comprises the device has advantages that correspond to the advantages of the device.

A computer program comprises that computer readable instructions that, when executed by a computer, cause the computer to execute the steps of the method has advantages that correspond to the advantages of the method.

Further advantageous embodiments are derivable from the following description and the drawing. In the drawing:

Fig. 1 schematically depicts a device for active learning from multimodal input,

Fig. 2 schematically depicts a first embodiment of active learning comprising a fusion of sensor data,

Fig. 3 schematically depicts a second embodiment of active learning comprising a fusion of feature vectors representing sensor data,

Fig. 4 schematically depicts a third embodiment of active learning comprising a fusion of decisions resulting from sensor data,

Fig. 5 depicts a flowchart comprising steps of a method for active learning from multimodal input.

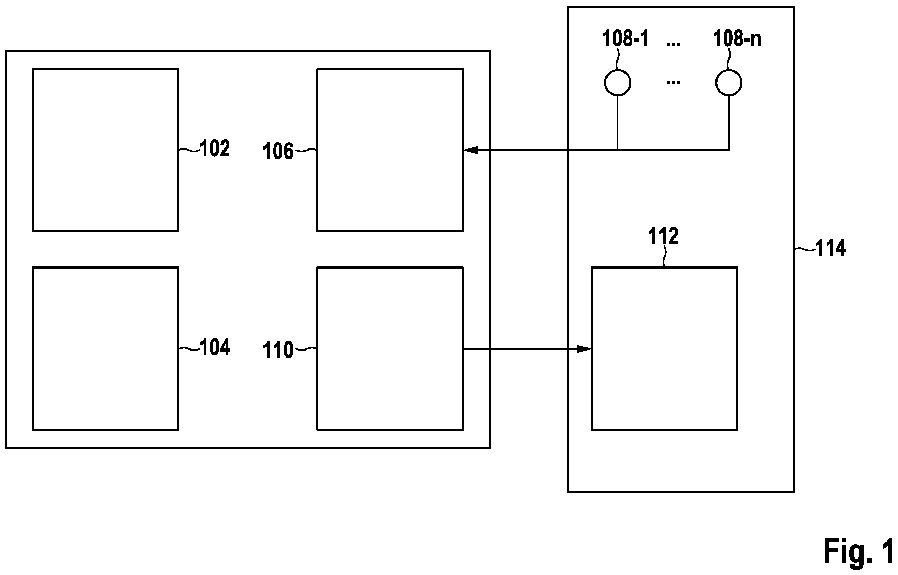

Figure 1 schematically depicts a device 100 for active learning from multimodal input.

The device 100 comprises at least one processor 102 and at least one memory 104.

The at least one memory 104 is configured to store instructions that when executed by the at least one processor 102 cause the device 100 to execute a method for active learning from multimodal input.

The at least one processor 102 is configured to execute the instructions.

The instructions may be computer readable instructions. A computer program my comprise the computer readable instructions. The computer readable instructions are configured to cause a computer to execute the steps of the method, when executed by the computer.

The device 100 may comprise in interface 106 for sensors 108-1, ..., 108-n for capturing the input. The device 100 may comprise the sensors 108-1, ..., 108-n, e.g., a digital image sensor, a LiDAR image sensor, a radar image sensor, an ultrasound image sensor, an infrared image sensor, or an acoustic signal sensor.

The device 100 may comprise an interface 110 for an actuator 112 for actuating a technical system 114. The device 100 may comprise the actuator 112.

The technical system 114 may comprise the device 100. The technical system 114 may comprise the sensors 108-1, ..., 108-n and/or the actuator 112.

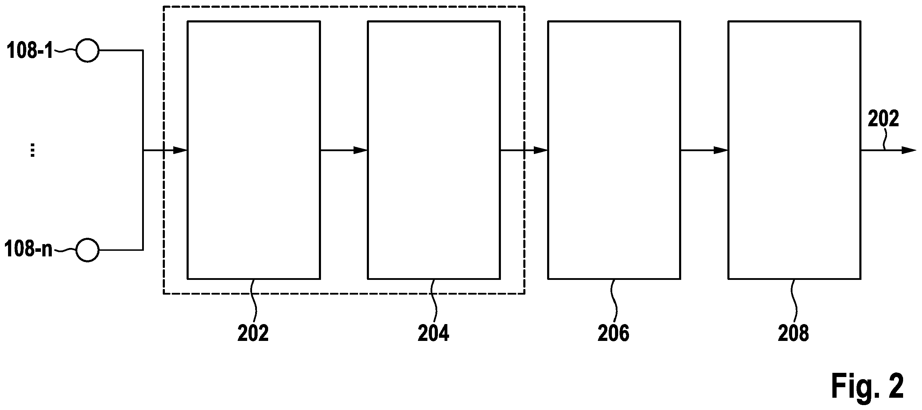

Figure 2 schematically depicts a first embodiment of active learning comprising a fusion of sensor data. The sensor data in the example is input from the sensors 108-1, ..., 108-n. The input may comprise an input of the mode digital image, LiDAR image, radar image, ultrasound image, infrared image, or acoustic signal.

The active learning comprises a signal processing 202, a fusion 204, a feature extraction 206 and a decision 208.

According to the first embodiment, the input is processed by the signal processing 202 to determine processed data of individual sensors. The processed data is processed in the fusion 204. The feature extraction 206 extracts information from the result of the fusion and an output 210 of the decision 208 is determined from a result of the feature extraction 206.

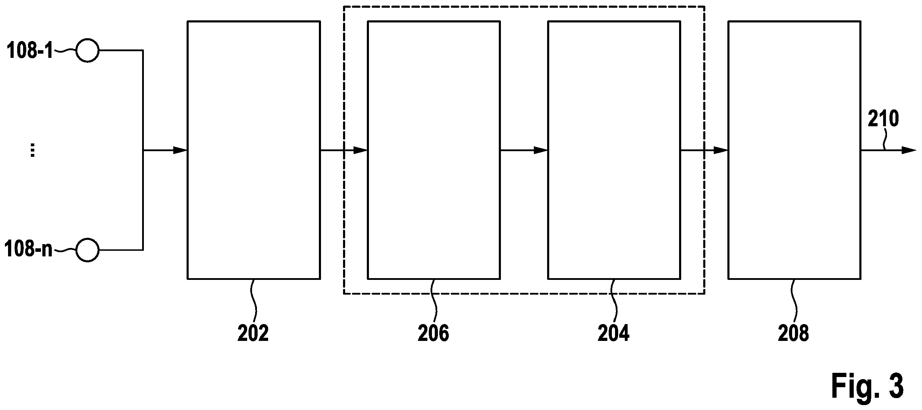

Figure 3 schematically depicts a second embodiment of active learning comprising a fusion of feature vectors representing sensor data.

In contrast to the active learning according to the first embodiment, the feature extraction 206 extracts features from the result of the signal processing 202 and the fusion 204 processes the result of the feature extraction 206. The output 210 of the decision 208 is determined from a result of the fusion 204.

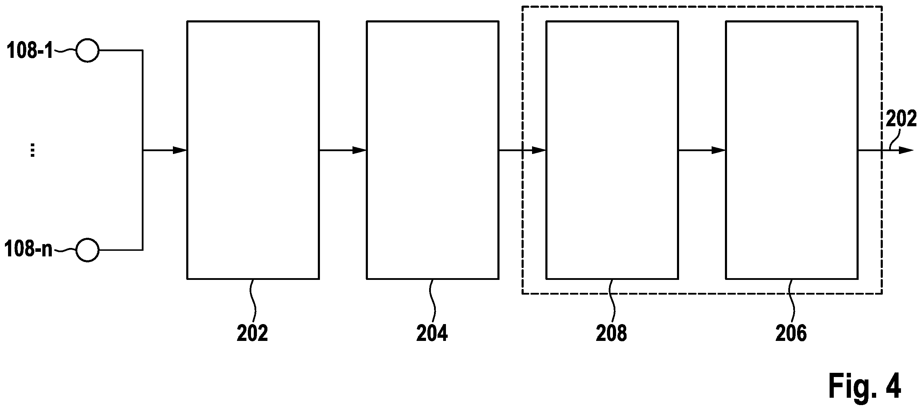

Figure 4 schematically depicts a third embodiment of active learning comprising a fusion of decisions resulting from sensor data.

In contrast to the active learning according to the first embodiment, the feature extraction 206 extracts features from the result of the signal processing 202 and the decision 208 determines decisions from the result of the feature extraction 206. The fusion 204 processes the decisions to determine the output 210.

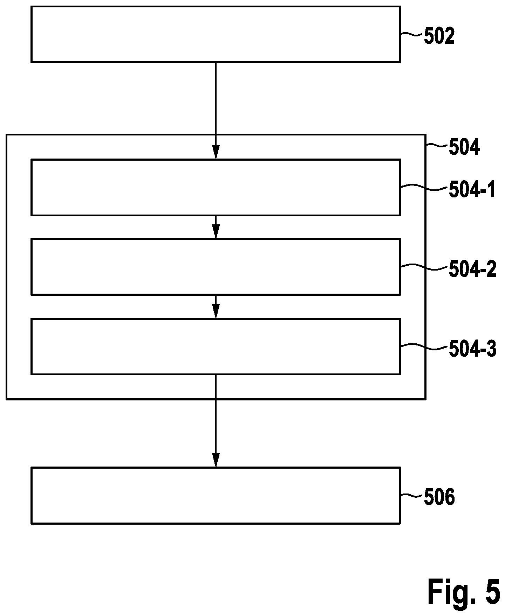

Fig. 5 depicts a flowchart comprising steps of a method for active learning from multimodal input.

The method comprises a step 502.

In step 502, the input is provided.

The input comprises input of different modes.

The input comprises for example an input of the mode digital image, LiDAR image, radar image, ultrasound image, infrared image, or acoustic signal.

The input may be captured with the sensors 108-1,..., 108-n, in particular with the digital image sensor, the LiDAR image sensor, radar image sensor, the ultrasound image sensor, the infrared image sensor, or the acoustic signal sensor.

The method comprises a step 504.

In step 504, a model F is learned depending on the input.

The model F may comprise a neural network, in particular a deep neural network, that comprises weights. The model F may be adapted to map the input to an output of the model depending on the weights.

Active learning the model F may comprise determining the weights.

Active learning is described by way of example for one task and different modes.

In the example the model F, is trained on the different modes for the purpose of solving a single task. Examples of the task are classification, image segmentation (pixel-level classification), 2D object detection, 3D object detection, depth prediction, free-space detection.

By way of example, the model F comprises a backbone and a task-specific head. The backbone receives the input of different modes as input. The head outputs the output of the model.

The method applies also for the model $F$ that is configured for solving different tasks.

The model $F$ for solving different tasks may comprise the backbone and different task-specific heads. This allows to run the deep neural network in spite of hardware constraints on a resource-limited chip, e.g., in a car.

The backbone may be trained jointly with the task-specific head or with the task-specific heads.

The backbone may be a convolutional backbone. The head may be configured for two-dimensional road sign detection or two-dimensional object detection, or semantic segmentation, or three-dimensional vehicle detection.

Learning the model $F$ comprises a step 504-1.

Step 504-1 comprises determining an input of a mode $m$ or inputs of different modes from the input of different modes. This means, active learning may comprise selecting the input of one mode m for labelling or selecting inputs of different modes for labelling. According to the example, at least one mode is not selected for labelling.

The input of the mode $m$ is determined depending on an acquisition function $acq$.

According to an example, the provided inputs of different modes are a pool of unlabeled data points $X_u$. Active learning focuses on selecting new data points from the unlabeled pool of data to be annotated and added to a training set $X$.

An exemplary acquisition function $acq_t = -C_t(x_u)$ comprises a measure for a cost $C_t$ for labelling the input of the mode $x_u$, i.e., an unlabeled data point of the unlabeled data.

The cost may be in euros. The cost may be influenced by multiple factors when considering real-world annotation, such as the level of difficulty of providing an accurate annotation or the training required to annotate or the time required to provide an annotation. For example, selecting pixels in a digital image corresponding to a cat requires no training for a human, selecting pixels corresponding to a tumor in a brain scan requires extensive training of the human.

These factors can lead to different real costs when labeling an actual data point, resulting in potentially very different costs for labeling for different tasks and modalities. This is reflected in the active learning.

The acquisition function *acq* may comprise a measure of an uncertainty $Unc(F, x_u)$ of the model *M* with respect to the input of the mode. The measure of the uncertainty enables selecting data points the trained network is uncertain about. The measure of the uncertainty $Unc(F, x_u)$ may be the entropy over the output of the model *M*. The output of the Model F for classification may be a SoftMax vector. The measure of the uncertainty $Unc(F, x_u)$ may be substituted with another measure, e.g., an acquisition function that disregards the cost mentioned above. The measure of the uncertainty $Unc(F, x_u)$ may be disregarded, e.g., set to Zero.

In case of active learning for several tasks, the cost function works across the tasks.

In case of active learning for several tasks, the acquisition function may comprise a measure for a synergy of learning the different tasks with the input of the mode.

This synergy can be either positive or negative, i.e., conflicting loss directions can result in slower convergence and reduced performance on individual tasks, or the presence of similar semantic content can result in better performance, i.e., individual tasks benefit from a shared, improved feature representation, resulting in increased performance on individual tasks.

For example, the synergy $Syn_t(x_u, T)$ is added to the acquisition function:

$$Unc(F, x_u) - C_t(x_u) + Syn_t(x_u, T)$$

An exemplary synergy function for a mode p is

$$Syn_p = \sum_{m=1}^{M} \sum_{w=1}^{W} \left| act(w_i, x_p) * act(w_i, x_m) \right|$$

wherein $x_p$ is an unlabeled input of mode *p*, $x_m$ is an unlabeled input of mode m, *M* is a set of modes excluding the mode *p*, wherein *act* is an activation function of the model, e.g., the neural network, and *W* is a set of shared weights $w_i$ of the model, e.g., the neural network. The activation function may be relu.

The synergy function $Syn_p$ is suitable for different modes when assuming that there is a set of data points for which the training set *X* comprises an input of all of the different modes.

Conceptually, the synergy function $Syn_p$ compares the activations of all of the shared weights for an unlabeled input on the trained model in question, and looks for situations where the same weight displays a high activation for both input modes. Preferably, the input modes are of the same semantic scene. The constraint requiring the input modes to be of the same semantic scene may also be relaxed, e.g., the synergy could be determined pairwise with other input of the training data for a given mode. For example, the synergy of an unlabeled image and labeled images in the training set *X* is determined for a given mode.

This is likely more expressive and useful, at the cost of increased computation or storage resources.

According to the example, the input that minimizes the acquisition function is determined. This means that the input is selected for labelling that has the least cost for labelling and is expected to maximize the model performance. The method may comprise selecting an input that has less cost or a better expected model performance than another input.

Learning the model comprises a step 504-2.

Step 504-2 comprises labelling the input of the mode with a label.

For a mode that comprises an image, the label may comprise a pixel-level annotation of the input of the mode *m.*

Learning the model comprises a step 504-3.

The step 504-3 comprises learning the model depending on the label.

According to the example, the model *F* is configured to map the input with the model *F* to an output. The output may be the output 210 of the decision 208 or the output 210 of the fusion 204 that processes the decisions to determine the output 210.

The model *F* is trained with the input to map the input to the output.

The model *F* may be trained depending on a batch of inputs comprising the input. The batch of inputs may be determined in iterations of the steps 504-1 and 504-2.

For example, a certain number of inputs to be labeled is selected iteratively based on the output of the acquisition function.

The selected input is then labeled and added to the training set X, either in actuality for a real system or simulated in an experimental setting.

The model *F* is trained for example with a loss:

$$L = (x, Y) = \sum_{t=1}^{T} L_t(x_t, y_t) * w_t$$

wherein *T* is the number of tasks, $w_t$ is a task-specific weighting, and $L_t$ is a task-specific loss-function. The task-specific loss function $L_t$ may be a cross-entropy or man-squared error.

The inputs $X = [x_1, \ldots, x_t]$ of a mode, e.g., a mode that comprises an image, is for example associated in a training dataset *X, Y* with a set of labels:

$$Y = [y_1, \ldots, y_t]$$

The model *F* may be retrained until some termination criterion is met. For example, the model *F* is trained until either a performance threshold, e.g., 99% accuracy, or a budget restriction, e.g., a total number of inputs, or money spent is met.

The model *F* may be trained on the training set *X* and then an inference for a plurality of unlabeled data points $x_u$ may be conducted with the trained model *F*. The acquisition function *acq* may be used for the outputs of the inference to determine a score per unlabeled data point $x_u$ and the unlabeled data point $x_u$ with the highest score may be selected for labelling.

The unlabeled data point may be sent for labelling to be annotated, and added to the training dataset *X, Y.* The model *F* may be retrained using the new, updated training dataset *X, Y,* and the process is repeated to acquire new datapoints, until a termination criterion is reached.

Referring to the examples describe in figures 2, 3 and 4, the model *F* may comprise the signal processing 202, the fusion 204, the feature extraction 206 and the decision 208. The synergy function may work on only shared weights. Shared weights in the first embodiment may be fusion 204 and feature extraction 206. Shared weights in the second embodiment may be feature extraction 206 and fusion 204. Shared weights in the third embodiment may be fusion 204 of the decisions.

The method may comprise a step 506.

In step 506 the technical system 114 may be actuated depending on the output.

The step 502 may be executed afterwards.

**Claims**

1. Method for active learning from multimodal input, **characterized in that** the method comprises providing (502) the input and learning (504) a model depending on the input, wherein the input comprises input of different modes, and wherein learning (504) the model comprises determining (504-1) an input of a mode from the input of different modes depending on an acquisition function that comprises a measure for a cost for labelling the input of the mode, labelling (504-2) the input of the mode with a label, and learning (504-3) the model depending on the label.

2. The method according to claim 1, **characterized in that** the method comprises and that the acquisition function comprises a measure of an uncertainty of the model with respect to the input of the mode.

3. The method according to claim 1 or 2, **characterized in that** the method comprises active learning (504) the model for different tasks, wherein the acquisition function comprises a measure for a synergy of learning the different tasks with the input of the mode.

4. The method according to one of the previous claims, **characterized in that** the method comprises determining (504-1) inputs of different modes from the input of different modes depending on the acquisition function.

5. The method according to one of the previous claims, **characterized in that** the providing (502) the input comprises providing the input to comprise an input of the mode digital image, LiDAR image, radar image, ultrasound image, infrared image, or acoustic signal.

6. The method according to one of the previous claims, **characterized in that** the providing (502) the input comprises capturing the input with sensors (108-1,..., 108-n), in particular a digital image sensor, a LiDAR image sensor, a radar image sensor, an ultrasound image sensor, an infrared image sensor, or an acoustic signal sensor.

7. The method according to one of the previous claims, **characterized in that** the method comprises learning (504-3) the model to map the input with the model to an output, and wherein the method comprises actuating (506) a technical system depending on the output.

8. Device (100) for active learning from multimodal input, **characterized in that** the device (100) comprises at least one processor (102) and at least one memory (104) that is configured to store instructions that when executed by the at least one processor (102) cause the device (100) to execute the method according to one of the claims 1 to 7, wherein the at least one processor (102) is configured to execute the instructions.

9. The device (100) according to claim 8, wherein the device (100) comprises sensors (108-1, ..., 108-n) or an interface (106) for sensors (108-1, ..., 108-n) for capturing the input.

10. The device (100) according to one of the claims 8 or 9, wherein the device (100) comprises an actuator (112) or an interface (110) for an actuator (112) for actuating a technical system (114).

11. Technical system (114), **characterized in that** the technical system comprises the device (100).

12. Computer program, **characterized in that** the computer program comprises computer readable instructions that, when executed by a computer, cause the computer to execute the steps of the method according to one of the claims 1 to 7.

Fig. 1

108-1

...

108-n

202

202

204

206

208

Fig. 2

EP 4 530 890 A1

Fig. 3

**Fig. 4**

502

504

504-1

504-2

504-3

506

Fig. 5

Europäisches
Patentamt
European
Patent Office
Office européen
des brevets

## EUROPEAN SEARCH REPORT

Application Number

EP 23 20 0374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Settles Burr ET AL: "Active Learning with Real Annotation Costs", , 2008, pages 1-10, XP093136578, Retrieved from the Internet: URL:https://burrsettles.com/pub/settles.nips08ws.pdf [retrieved on 2024-02-29] | 1,2,4-12 | INV. G06F18/21 G06F18/25 G06N3/091 G06V10/778 G06V10/80 |
| A | * Abstract, Introduction, pages 7, 8 * ----- | 3 | |
| X | RUIJIANG GAO ET AL: "Cost-Accuracy Aware Adaptive Labeling for Active Learning", ARXIV.ORG, CORNELL UNIVERSITY LIBRARY, 201 OLIN LIBRARY CORNELL UNIVERSITY ITHACA, NY 14853, 24 May 2021 (2021-05-24), XP081968961, | 1,2,4-12 | |
| A | * pages 1-4 * ----- | 3 | |
| X | Margineantu Dragos D: "Active Cost-Sensitive Learning", , 30 July 2005 (2005-07-30), pages 1-2, XP093136841, Retrieved from the Internet: URL:https://www.ijcai.org/Proceedings/05/Papers/post-0525.pdf [retrieved on 2024-03-01] | 1,2,4-12 | TECHNICAL FIELDS SEARCHED (IPC) G06F G06N G06V |
| A | * the whole document * ----- | 3 | |
| T | MENG SHEN ET AL: "Towards Balanced Active Learning for Multimodal Classification", ARXIV.ORG, CORNELL UNIVERSITY LIBRARY, 201 OLIN LIBRARY CORNELL UNIVERSITY ITHACA, NY 14853, 21 August 2023 (2023-08-21), XP091586806, DOI: 10.1145/3581783.3612463 ----- | 1-12 | |

The present search report has been drawn up for all claims

| Place of search | Date of completion of the search | Examiner |
|---|---|---|
| The Hague | 1 March 2024 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)